# FASCICULE DE BREVET EUROPEEN

(11) **EP 0 708 935 B1**
(45) Date de publication et mention de la délivrance du brevet: **15.06.2005**
(21) Numéro de dépôt: 95920935.4
(22) Date de dépôt: 10.05.1995
(51) Int. Cl.: G03H 1/02, B42D 15/10

(54) **PROCEDE POUR LE TRANSFERT IRREVERSIBLE D'UN RESEAU DE DIFFRACTION, FILM DE TRANSFERT ET DISPOSITIF POUR LA MISE EN UVRE DU PROCEDE**
VERFAHREN UND ANLAGE ZUM IRREVERSIBLEN ÜBERTRAGEN EINES BEUGUNGSGITTERS
METHOD FOR IRREVERSIBLY TRANSFERRING A DIFFRACTION GRATING, TRANSFER FILM AND DEVICE THEREFOR

(30) Priorité: 11.05.1994 FR 9405848
(43) Date de publication de la demande: 01.05.1996
(73) Titulaire: HOLOGRAM INDUSTRIES S.A.R.L., 94120 Fontenay-sous-Bois (FR)
(72) Inventeur: SOUPARIS, Huges, F-75020 Paris (FR)
(74) Mandataire: Pernez, Helga
(86) Numéro de dépôt international: PCT/FR1995/000615
(87) Numéro de publication internationale: WO 1995/031756

(56) Documents cités:
- EP-A- 0 291 928
- EP-A- 0 401 466
- EP-A- 0 466 118
- CH-A- 678 835

## Description

La présente invention concerne un procédé pour le transfert irréversible d'un réseau de diffraction tel qu'un hologramme estampé sur un substrat tel qu'un document ou un produit à sécuriser, par exemple des billets de banque, des documents administratifs, des documents fiduciaires, des documents d'identité, des cartes de crédit.

Pour transférer un composant optique tel qu'un réseau de diffraction ou un hologramme estampé sur la surface d'un document ou d'un produit en papier ou en plastique, on connaît dans l'art antérieur essentiellement deux méthodes :
- le marquage à chaud ;
- la pose d'une étiquette.

Le transfert par pose d'une étiquette est difficilement compatible avec une automatisation de la pose. De plus, une étiquette peut être facilement retirée de son substrat initial, et réutilisée sur un autre substrat, ce qui est contraire à la sécurisation du substrat.

On a proposé des étiquettes comportant une couche de fragilisation aboutissant à la séparation localisée des couches en cas de tentative de décollement. Il est toutefois difficile de concilier la solidité de l'étiquette pour résister aux manipulations en usage courant du document, avec l'efficacité de la séparation destructive en cas d'arrachage frauduleux.

Pour pallier à ces inconvénients, on a proposé dans l'art antérieur, par exemple dans le brevet britannique GB2181993, ou dans le brevet britannique GB2129739, un procédé de marquage, notamment de marquage à chaud, consistant à préparer un film de transfert multicouche composé d'un film support très fin, en général inférieur à 25 microns, d'un adhésif réactivable à chaud, d'une couche métallisée ou réflective transparente déformée par l'image optique par estampage, d'un vernis de protection et d'une couche de détachement.

Le transfert est effectué par application de chaleur et d'une forte pression sur le film à l'aide d'un outil ayant la forme de l'élément à transférer. La chaleur réactive localement l'adhésif thermique et les couches actives du composant optique sont collées selon le contour de l'outil.

Le film porteur est alors retiré. Les couches formant le composant optique se cassent le long de la ligne entourant la surface collée, selon la forme de l'outil de transfert. La surface qui est collée se sépare du film support au niveau de la couche de détachement.

Ce procédé de transfert est satisfaisant pour des composants optiques composés de couches suffisamment fines, pour garantir une rupture nette du composé actif le long de la ligne séparant la zone de colle réactivée.

Par contre, ce procédé n'est pas compatible avec le transfert de composants optiques comportant des couches épaisses, ni avec l'emploi de films de transfert comportant un film support épais.

Par ailleurs, l'outil de transfert est spécifique à l'élément à transférer, puisque sa forme doit correspondre précisément à celle du composant optique que l'on veut déposer sur le substrat. De plus, pour des transferts en série, l'image optique portée par le film doit être positionnée automatiquement sous l'outil chauffant, ce qui nécessite le recours à des systèmes de repérage optique sur la matrice de transfert.

Enfin, le choix de l'adhésif est critique car il doit permettre une rupture nette le long de la zone collée.

L'objet de la présente invention est de remédier à ces inconvénients en proposant un procédé permettant le transfert à l'aide d'un outillage non spécifique de faible coût, et évitant les contraintes quant à l'épaisseur des couches du composant optique ou du film support, ou à la nature de l'adhésif.

Le procédé selon l'invention est défini dans la revendication 1.

L'étape de préparation du film de transfert consiste à déposer sur un film support de dimensions supérieures ou égales à l'élément à transférer au moins un composant optique dont la dimension correspond exactement à l'élément à transférer sur le substrat, et en ce que l'outil de transfert agit sur une partie du film de transfert de dimensions supérieures à la surface correspondant à l'élément à transférer.

Le transfert peut être mis en oeuvre à l'aide d'un outil non spécifique tel qu'un lamineur ou une presse chauffante présentant une matrice dont la forme est indépendante de la forme du composant optique à transférer.

Par ailleurs, le procédé selon l'invention permet également de transférer à froid un élément optique dont les couches consécutives sont plus fragiles que les étiquettes traditionnelles, et beaucoup plus épaisses que les couches mises en oeuvre dans les procédés de transfert à chaud connus dans l'état de la technique. L'élément optique est constitué de plusieurs couches dont l'une porte l'image optique, formée par estampage. Les autres couches peuvent avoir des fonctions optiques ou mécaniques, par exemple une fonction anti-abrasion et peuvent être imprimées. Une fois transféré sur le document auquel il est destiné, l'élément optique ne peut plus être détaché de son support sans être endommagé. En cas de tentative de détachement, les différentes couches n'ayant pas la même résistance mécanique se détachent séparément, et du fait de leur faible épaisseur, ne peuvent plus être réutilisées pour le marquage d'un document non authentique.

Avantageusement, le transfert s'effectue par laminage d'un ensemble composé par le substrat et le film de transfert superposés.

Selon une autre variante, le film support est continu et les composants optiques sont répartis sur le film de manière à être transférés sur un substrat continu par laminage.

L'invention concerne également un film de transfert qui est défini dans la revendication 3. Le film de transfert pour le transfert irréversible d'un réseau de diffraction tel qu'un hologramme estampé sur un substrat tel qu'un document ou un produit à sécuriser, est constitué par un film support portant au moins une couche formée par un vernis de protection, une couche réflective métallisée ou transparente comportant l'image optique estampée, et une couche d'adhésif activable par un outil; le film support comporte au moins un composant optique multicouche prédécoupé et les dimensions du film support sont supérieures aux dimensions de l'élément optique.

Selon une variante, l'épaisseur du film support est supérieure à 10 microns, de préférence comprise entre 25 microns et 100 microns.

Selon une autre variante, les dimensions du film support correspondent aux dimensions d'un substrat ou d'une juxtaposition de substrats, les composants optiques étant positionnés sur le film support de manière à être transférables sur le ou les substrats par l'action d'un outil unique tel qu'une presse chauffante ou un rouleau de laminage.

L'invention concerne encore un dispositif pour le transfert d'un réseau de diffraction tel qu'un hologramme estampé sur un substrat tel qu'un document ou un produit à sécuriser, constitué par un rouleau de laminage.

L'invention sera mieux comprise à la lecture de la description qui suit, faisant référence aux dessins annexés où :
- la figure 1 représenté une vue en coupe du film de transfert ;
- la figure 2 représente une vue de dessus du film de transfert et du document destiné à recevoir les éléments optiques ;
- la figure 3 représente une vue en coupe de l'outil de transfert ;
- la figure 4 représente une vue en coupe d'un exemple particulier de mise en oeuvre.

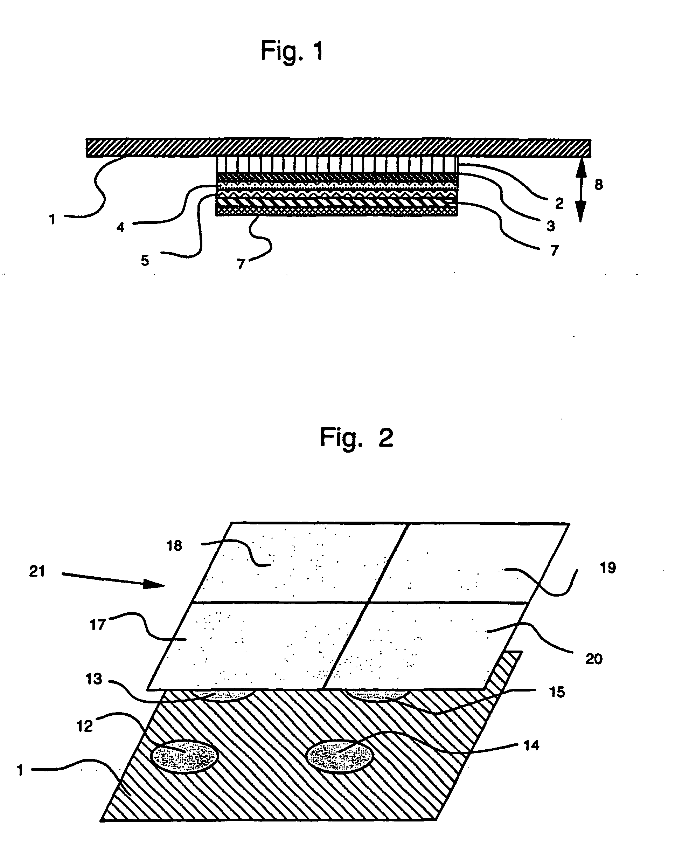

La figure 1 représente une vue en coupe du film de transfert.

Le film de transfert est composé au moins :
- d'un film support épais (1), typiquement d'une épaisseur de 12 à 50 microns, par exemple en polyester transparent ;
- d'une couche de détachement (3) ;
- d'un vernis de protection (4) ;
- d'une couche réflective (5) métallisée ou transparente comportant l'image optique estampée ;
- d'une couche facultative (6) de vernis de protection ;
- d'une couche de colle (7) réactivable à chaud.

La couche de vernis (6) est destinée à éviter que l'arrachement de l'élément optique (8) ne laisse subsister une couche d'adhésif (6) portant l'empreinte de l'image estampée formée à la surface de la couche réflective (5).

Selon le mode de réalisation retenu le film transfert peut comporter un film (2) en général en polyester intermédiaire contre collé sur le film (1).

L'élément optique (8) se présente sous forme d'un ensemble multicouche prédécoupé pour présenter la forme du composant de marquage à transférer.

Le film support (1) présente des dimensions correspondant par exemple à celles du document à marquer.

Un exemple de procédé de fabrication d'un film de transfert conforme à l'invention est exposé ci-après.

Sur un film polyester (2) de préparation, on enduit tout d'abord une couche de détachement (3) similaire à celle utilisée pour les films de marquage à chaud. On enduit ensuite une ou plusieurs couches de vernis (4) puis une couche réflective métallisée ou transparente (5). Cet ensemble est estampé par une matrice portant l'image optique ou réseau ou hologramme sous forme de microreliefs de surface. On enduit ensuite cet ensemble avec une ou plusieurs couches de vernis de protection (6) puis avec une couche d'adhésif (7).

On découpe ensuite l'ensemble multicouche (8). Le film multicouche (8) ainsi obtenu est collé sur un support (1) film ou papier recouvert d'une couche anti adhérente à l'aide d'un adhésif suivant la forme des éléments à transférer. Les éléments découpés sont ensuite détachés du film et sont collés sur le film support (1) qui sera utilisé pour le transfert de l'élément sur le substrat à marquer, suivant une implantation correspondant à la géométrie du marquage à réaliser.

La couche de colle activable (7) peut être remplacée par un adhésif permanent protégé par une pellicule pelable. Il peut encore être remplacé par un adhésif réactivable par un rayonnement ultraviolet.

Le transfert s'effectue alors en détachant la pellicule pelable et en appliquant le film de transfert sur le document à marquer. On détache ensuite le film support (1) au niveau de la couche de détachement (3).

Certaines des couches (2 à 6) peuvent être imprimées avec des procédés d'impression traditionnels, notamment avec des encres transparentes réagissant aux rayons ultraviolets.

La figure 2 représente une vue d'un film de transfert constitué par un film support (1) portant quatre éléments optiques multicouches (12 à 15).

Ces éléments (12 à 15) sont disposés suivant une matrice dont la géométrie correspond à celle de la planche (10) de documents (17 à 20) à marquer. La superposition du film support (1) et de la planche de documents (21) assure le positionnement précis des éléments à transférer (12 à 15) avec les emplacements de destination sur chacun des documents (17 à 20).

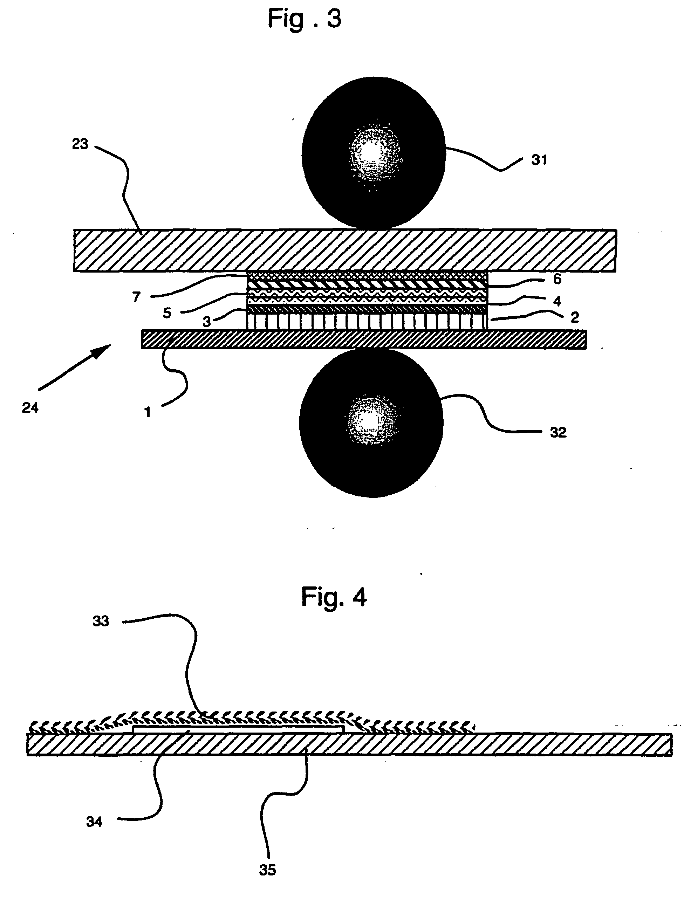

La figure 3 représente une vue de l'outil de transfert. Il comporte deux rouleaux chauffants (31, 32) assurant une pression sur l'ensemble formé par le substrat (23) destiné à recevoir l'élément optique et le film de transfert (24).

Les rouleaux (17, 18) assurent le laminage de l'ensemble et la réactivation de la couche de colle (6) formant la couche la plus éloignée du film support (1).

Dans une variante simplifiée de l'invention, le film polyester (2) de l'ensemble multicouche (8) est suffisamment épais pour faciliter la manipulation (50 microns). L'ensemble multicouche (8) est découpé à la forme de marquage à transférer. La pastille ainsi obtenue est posée sur le document substrat. L'ensemble "substrat-pastille" est laminé à chaud ou pressé et chauffé. Le film polyester (2) est détaché manuellement. La pastille et le substrat peuvent être de forme identique. Tel est le cas par exemple d'un transfert sur toute la surface d'une carte de crédit.

La figure 4 représente une variante particulière de mise en oeuvre.

L'élément optique (33) composé des différentes couches (3 à 7) est déposé sur une partie du document à marquer (35) comportant une photographie (34) posée ou de préférence collée préalablement au marquage. Les couches (3 à 7) forment à la fois une marque d'authentification et un moyen de scellage dont le retrait provoque la destruction et donc la perte du caractère d'authentification du document.

L'invention est décrite dans ce qui précède à titre d'exemple non limitatif. L'homme du métier sera à même de réaliser différentes variantes sans pour autant sortir du cadre de l'invention.

## Revendications

1. Procédé pour le transfert irréversible d'un réseau de diffraction tel qu'un hologramme estampé sur un substrat (21, 23) tel qu'un document ou un produit à sécuriser, consistant à :
préparer un film de transfert (24) composé d'un film support (1), d'un composant optique (8) comportant une couche réflective (5) métallisée ou transparente comprenant l'image optique estampée et au moins une couche de vernis de protection (4, 6), et d'une couche de détachement (3) permettant la séparation du composant optique (8) dudit film support (1),
superposer le film de transfert (24) ainsi préparé avec ledit substrat (21, 23), et
assurer le transfert du composant optique (8) sur le substrat (21, 23) de manière à coller le composant optique (8) sur ledit substrat (21, 23), l'étape de transfert étant réalisée par deux rouleaux de laminage appliqués sur l'ensemble composé par le film de transfert (24) et le substrat (21, 23) superposés,
**caractérisé en ce que** l'étape de préparation du film de transfert (24) consiste successivement à
a) fabriquer un ensemble estampé recouvert d'une couche facultative de vernis de protection (6) et d'une couche d'adhésif (7), ledit ensemble estampé étant constitué d'un film polyester (2), d'au moins une couche de vernis (4), et de ladite couche réflective (5),
b) apposer l'ensemble estampé ainsi formé sur ledit film support (1), ledit film support (1) présentant des dimensions supérieures audit composant optique (8) à transférer dont la dimension correspond exactement à l'élément à transférer sur le substrat (21, 23),
**et en ce que,** lors de l'étape de transfert du composant optique (8) sur ledit substrat (21, 23), ledit film polyester (2) reste fixé sur ledit film support (1).

2. Procédé pour le transfert irréversible d'un réseau de diffraction selon la revendication 1, **caractérisé en ce que** le transfert s'effectue sur une partie d'un document (35) portant une photographie (34).

3. Film de transfert (24) pour le transfert irréversible d'un réseau de diffraction tel qu'un hologramme estampé sur un substrat (23) tel qu'un document ou un produit à sécuriser, constitué par
un film support (1),
un composant optique (8) comportant une couche réflective (5) métallisée ou transparente comportant l'image optique estampée et au moins une couche de vernis de protection (4, 6),et une couche d'adhésif (7),
une couche de détachement (3) permettant la séparation du composant optique (8) dudit film support (1),
**caractérisé en ce que** ledit film de transfert (24) comporte un film polyester (2) situé entre la couche de détachement (3) et le film support (1), ledit composant optique (8) transféré ne comportant pas de film polyester,
et **en ce que** les dimensions du film support (1) sont supérieures aux dimensions du composant optique (8) à transférer, les dimensions du composant optique (8) correspondant exactement à l'élément à transférer sur le substrat (23).

4. Film de transfert (24) selon la revendication 3 **caractérisé en ce que** l'épaisseur du film support (1) est supérieure à 10 microns, de préférence comprise entre 25 microns et 100 microns.

5. Film de transfert (24) selon l'une quelconque des revendications 3 ou 4 **caractérisé en ce que** les dimensions du film support (1) correspondent aux dimensions du substrat (23) ou d'une juxtaposition de substrats (21, 23), les éléments optiques étant positionnés sur le film support (1) de manière à être transférables sur le ou les substrats (21, 23) par l'action d'un outil unique tel qu'une presse chauffante ou un rouleau de laminage.

6. Film de transfert selon la revendication 3 **caractérisé en ce que** l'épaisseur et la nature des vernis utilisés sont déterminées de manière à permettre le scellage d'une photographie sur le substrat (23).

## Patentansprüche

1. Verfahren für den irreversiblen Transfer eines Beugungsgitters, wie ein Hologramm, das geprägt auf einem Substrat (21, 23) ist, wie ein Dokument oder ein Produkt, das gesichert werden soll, wobei dieses Verfahren folgendes umfasst:
Vorbereiten eines Transferfilms (24) bestehend aus einem Trägerfilm (1), einer optischen Komponente (8) mit einer Reflexionsschicht (5), die metallisiert oder transparent ist, mit dem geprägten optischen Bild und mindestens einer Schutzlackschicht (4, 6), und einer Detachierschicht (3), die die Trennung der optischen Komponente (8) vom besagten Trägerfilm (1) erlaubt,
Aufeinanderlegen des Transferfilms (24), der derart vorbereitet ist, mit dem besagten Substrat (21, 23), und
Sicherstellen des Transfers von der optischen Komponente (8) auf das Substrat (21, 23), und dies derart, dass die optische Komponente (8) auf das besagten Substrat (21, 23) geklebt ist, wobei die Etappe des Transfers durch zwei Walzrollen realisiert wird, die auf die Einheit angelegt werden, die sich aus dem Transferfilm (24) und dem Substrat (21, 23), die aufeinanderliegen, zusammen setzt,
**dadurch gekennzeichnet, dass** die Etappe der Vorbereitung des Transferfilms (24) sukzessiv folgendes umfasst:
a) Herstellen einer geprägten Einheit, die von einer fakultativen Schutzlackschicht (6) und einer Klebeschicht (7) beschichtet ist, wobei sich die besagte geprägte Schicht aus einem Polyesterfilm (2), mindestens einer Lackschicht (4) und aus der besagten Reflexionsschicht (5) zusammen setzt,
b) Anbringen der geprägten Einheit, die derart auf dem besagten Trägerfilm (1) gebildet ist, wobei der besagte Trägerfilm (1) größere Dimensionen aufweist, als die von der optischen Komponente (8), die zu transferieren ist, deren Dimension genau dem Element entspricht, das auf das Substrat (21, 23) zu transferieren ist,
und **dadurch gekennzeichnet, dass** bei der Etappe des Transfers von der optischen Komponente (8) auf das besagte Substrat (21, 23), der besagte Polyesterfilm (2) auf dem besagten Trägerfilm (1) fixiert bleibt.

2. Verfahren für den irreversiblen Transfer eines Beugungsgitters nach Anspruch 1, **dadurch gekennzeichnet, dass** der Transfer auf einem Teil eines Dokuments (35) erfolgt, das eine Fotografie (34) aufweist.

3. Transferfilm (24) für den irreversiblen Transfer eines Beugungsgitters, wie ein Hologramm, das geprägt auf einem Substrat (23) ist, wie ein Dokument oder ein Produkt, das gesichert werden soll, bestehend aus
einem Trägerfilm (1),
einer optischen Komponente (8) mit einer Reflexionsschicht (5), die metallisiert oder transparent ist, mit dem geprägten optischen Bild und mindestens einer Schutzlackschicht (4, 6), und einer Klebeschicht (7),
einer Detachierschicht (3), die die Trennung der optischen Komponente (8) vom besagten Trägerfilm (1) erlaubt,
**dadurch gekennzeichnet, dass** der besagte Transferfilm (24) einen Polyesterfilm (2) aufweist, der sich zwischen der Detachierschicht (3) und dem Trägerfilm (1) befindet, wobei die besagte optische Komponente (8), die transferiert ist, keinen Polyesterfilm aufweist,
und **dadurch gekennzeichnet, dass** die Dimensionen des Trägerfilms (1) größer sind, als die von der optischen Komponente (8), die zu transferieren ist, wobei die Dimensionen der optischen Komponente (8) genau dem Element entsprechen, das auf das Substrat (23) zu transferieren ist.

4. Transferfilm (24) nach Anspruch 3, **dadurch gekennzeichnet, dass** die Dicke des Trägerfilms (1) größer als 10 Mikron ist, und vorzugsweise zwischen 25 Mikron und 100 Mikron liegt.

5. Transferfilm (24) nach einem der Ansprüche 3 oder 4, **dadurch gekennzeichnet, dass** die Dimensionen des Trägerfilms (1) den Dimensionen vom Substrat (23) entsprechen oder einer von einer Nebeneinanderstellung von Substraten (21, 23), wobei die optischen Elemente derart auf dem Trägerfilm (1) positioniert sind, dass sie auf dem oder den Substraten (21, 23) transferierbar sind durch die Aktionen eines einzigen Werkzeuges, wie eine Heizpresse oder eine Walzrolle.

6. Transferfilm (24) nach Anspruch 3, **dadurch gekennzeichnet, dass** die Dicke und die Natur der Lacke, die eingesetzt werden, derart bestimmt werden, dass sie die Versiegelung einer Fotografie auf dem Substrat (23) erlauben.

## Claims

1. Process for the irreversible transfer of a diffraction grating such as a hologram stamped on a substrate (21, 23) such as a document or a product to be made secure, consisting of:
preparing a transfer film (24) composed of a support film (1), an optical component (8) comprising a metallised or transparent reflective layer (5) comprising the stamped optical image and at least one protective varnish layer(4, 6) and a detachment layer (3) for separation of the optical component (8) from the said support film (1),
superposing the transfer film (24) thus prepared with the said substrate (21, 23), and
transferring the optical component (8) onto the substrate (21, 23) so as to bond the optical component (8) onto the said substrate (21, 23), the transfer step being done by two laminating rollers applied onto the assembly consisting of the superposed transfer film (24) and substrate (21, 23),
**characterised in that** the step for preparation of the transfer film (24) consists of the following sequence of steps:
a) make a stamped assembly covered by an optional coat of protective varnish (6) and an adhesive layer (7), the said stamped assembly being composed of a polyester film (2), at least one varnish layer (4) and the said reflective layer (5),
b) place the stamped assembly thus formed onto the said support film (1), the said support film (1) having dimensions greater than the said optical component (8) to be transferred that has dimensions corresponding precisely to the element to be transferred onto the substrate (21, 23),
and **in that** during the transfer step of the optical component (8) onto the said substrate (21, 23), the said polyester film (2) remains fixed to the said support film (1).

2. Process for irreversible transfer of a diffraction grating according to claim 1, **characterised in that** the transfer is made on part of a document (35) carrying a photograph (34).

3. Transfer film (24) for irreversible transfer of a diffraction grating such as a hologram stamped onto a substrate (23) such as a document or a product to be made secure, composed of:
a support film (1),
an optical component (8) comprising a metallised or transparent reflective layer (5) comprising the stamped optical image and at least one layer of protective varnish (4, 6) and an adhesive layer (7),
a detachment layer (3) for separation of the optical component (8) from the said support film (1),
**characterised in that** the said transfer film (24) comprises a polyester film (2) located between the detachment layer (3) and the support film (1), the said transferred optical component (8) not including any polyester film,
and **in that** the dimensions of the support film (1) are greater than the dimensions of the optical component (8) to be transferred, the dimensions of the optical component (8) corresponding exactly to the element to be transferred on the substrate (23).

4. Transfer film (24) according to claim 3, **characterised in that** the thickness of the support film (1) is greater than 10 microns, and is preferably between 25 microns and 100 microns.

5. Transfer film (24) according to any one of claims 3 or 4 **characterised in that** the dimensions of the support film (1) correspond to the dimensions of the substrate (23) or the combined substrates (21, 23), the optical elements being positioned on the support film (1) so as to be transferable onto the substrate(s) (21, 23) by the action of a single tool such as a hot press or a laminating roller.

6. Transfer film according to claim 3, **characterised in that** the thickness and nature of the varnishes used are determined so as to enable a photograph to be sealed onto the substrate (23).
